# EUROPÄISCHE PATENTSCHRIFT

(11) **EP 2 344 776 B1**
(45) Veröffentlichungstag und Bekanntmachung des Hinweises auf die Patenterteilung: **11.03.2015**
(21) Anmeldenummer: 09751808.8
(22) Anmeldetag: 04.11.2009
(51) Int. Cl.: F16B 21/08, H01R 13/73

(54) **BEFESTIGUNGSCLIP**
FASTENING CLIP
CLIP DE FIXATION

(30) Priorität: 04.11.2008 FR 0806132
(43) Veröffentlichungstag der Anmeldung: 20.07.2011
(73) Patentinhaber: TRW Automotive Electronics & Components GmbH, 78315 Radolfzell (DE)
(72) Erfinder: KLEIN, Jean, Luc, F-67350 Ringendorf (FR); KUHM, Michel, F-67340 Ingwiller (FR)
(74) Vertreter: Prinz & Partner mbB
(86) Internationale Anmeldenummer: PCT/EP2009/007909
(87) Internationale Veröffentlichungsnummer: WO 2010/051986

(56) Entgegenhaltungen:
- US-A- 4 920 618
- US-A- 5 324 151
- US-A1- 2006 117 535

## Beschreibung

Die vorliegende Erfindung betrifft einen Clip zur Befestigung eines Elements an einer Struktur, mit mindestens einer Rille, die durch zwei parallele und gegenüberliegende Einhakränder begrenzt ist, wobei der Befestigungsclip eine Lasche aufweist, die so ausgelegt ist, dass sie zumindest an einem ihrer Ränder auf einer ersten Ebene und einer zweiten Ebene, die zueinander parallel sind, mit der Rille zusammenwirken kann, wobei die Lasche mindestens ein Befestigungsmittel aufweist, das mindestens eine erste Fläche und mindestens eine zweite Fläche aufweist, wobei die erste Fläche vollständig auf einer ersten Seite, in Bezug auf die erste Ebene zurückgesetzt und in der Dicke der Lasche zur zweiten Ebene verläuft, und wobei sich die zweite Fläche vollständig auf einer zweiten Seite und von der zweiten Ebene hervorstehend zum Äußeren der Lasche und gegenüber der ersten Fläche erstreckt, wobei die erste Fläche und die zweite Fläche zusammen mindestens einen elastisch verformbaren Bereich begrenzen.

Die Erfindung betrifft das Gebiet der Befestigung von Einrichtungen an einer Struktur und insbesondere die Befestigung von Steckern, insbesondere von elektrischen Steckern, an der Struktur eines Straßenfahrzeugs vom Typ Kraftfahrzeug oder dergleichen.

Die Struktur eines Straßenfahrzeugs vom Typ Kraftfahrzeug weist in bekannter Weise eine Reihe von unterschiedlich geformten Öffnungen auf, die meistens kreisförmig und dazu vorgesehen sind, Befestigungselemente, die Clips genannt werden, aufzunehmen und mit diesen zusammenzuwirken, um verschiedene Zubehörteile zu halten. Es sind verschiedene Arten Befestigungsclips zur Befestigung von Einrichtungen an der Struktur von Fahrzeugen bekannt. Diese Befestigungsclips, die im Allgemeinen aus Kunststoffmaterialien hergestellt sind, weisen einen Kopf auf, der so ausgebildet ist, dass er die Verbindung mit der zu befestigenden Einrichtung gewährleistet, sowie eine Basis, die mit Kraft oder durch Blockierung in eine Öffnung der Struktur eingeführt wird. Diese Öffnung kann rechteckig, länglich oder rund sein.

Herkömmlicherweise weisen die zu befestigenden Stecker auf einer Fläche, die die Struktur berührt, eine Längsrille auf, die auf mindestens einer Seite ausmündet, einen insgesamt T-förmigen Querschnitt hat und auf Höhe von zwei Flügeln mit einer Lasche zusammenwirken kann, die der Befestigungsclip aufweist. Dieser muss eine ausreichende Kraft zum Halten des Steckers gewährleisten, während die Kraft, die zum Einführen dieser Lasche in diese Rille erforderlich ist, so gering wie möglich sein muss.

Es ist häufig erforderlich, diese Stecker auszubauen, um Wartungsarbeiten vorzunehmen, was der Rille und/oder der Lasche schadet und die Haltekraft des Befestigungsclips verschlechtert.

Die durch Clips befestigten Stecker sind bei der Benutzung des Fahrzeugs häufig Vibrationen und abrupten Beschleunigungen ausgesetzt, was die Verschlechterung des Clips und/oder der Rille beschleunigt. Darüber hinaus können die Herstellungstoleranzen der Stecker und der Clips zu großen Abmessungsunterschieden zwischen diesen führen und eine Verschlechterung der von dem Clip am Stecker erzeugten Haltekraft hervorrufen. Es ist bekannt, dass die Stecker und die Clips ferner an Stellen angeordnet sein können, die großen Temperaturschwankungen ausgesetzt sein können, wie etwa im Motorraum, und dass diese Stecker und diese Clips aus Materialien unterschiedlicher Art und somit mit unterschiedlichen Ausdehnungskoeffizienten bestehen können. Dies führt somit zu unterschiedlichen Wärmedehnungen der beiden Teile und somit zu Unterschieden bei den Einstellungen, die zusätzlich zur Verschlechterung der von den Befestigungsclips erzeugten Haltekraft führen können.

Die Verschlechterung der von dem Clip erzeugten Haltekraft kann zur Folge haben, dass eine relative Verschiebung zwischen dem befestigten Teil und dem Befestigungsclip hervorgerufen werden kann, was bis zu ihrer Trennung führen kann.

Man hat im Stand der Technik versucht, diesen Nachteil zu minimieren, indem auf Höhe der Lasche des Clips ein Materialvorsprung mit einer geeigneten Form gebildet wurde, der dazu bestimmt ist, ein Klemmen des Clips in der Rille des Steckers hervorzurufen. Diese Ausführung führt zu sehr hohen mechanischen Spannungen am Clip und/oder an der Rille auf Höhe des Materialüber-schusses und/oder an den Flügeln der Rille des Steckers, was zu Befestigungsbrüchen führt.

Ein Befestigungsclip mit den Merkmalen des Oberbegriffs des Anspruchs 1 ist aus der US 5 324 151 A bekannt. Der Clip dient zur Befestigung eines elektrischen Steckverbinders und weist Rippen auf, die in entsprechende Nuten des Steckverbinders eingeschoben werden können.

Die Erfindung schlägt vor, die Nachteile aus dem Stand der Technik zu beseitigen, um die zahlreichen Demontagevorgänge ohne Beschädigung zu ermöglichen.

Zur Lösung dieser Aufgabe wird ein Clip mit den Merkmalen des Anspruchs 1 vorgeschlagen.

Aufgrund des Vorhandenseins von elastisch verformbaren Bereichen, die mit der Ausbildung des Volumens zum Kompensieren der Materialverlagerung kombiniert werden, bietet die Erfindung den wichtigen Vorteil einer erheblichen Verringerung der permanenten Spannungen am Befestigungsclip und somit der Gefahr von Rissen. Mit der Erfindung ist es möglich, eine Befestigung mit systematischer Spielbeseitigung zu erhalten und gleichzeitig das Einführen des Befestigungsclips in die zugeordnete Rille des zu befestigenden Elements zu vereinfachen.

Weitere Merkmale und Vorteile der Erfindung ergeben sich aus der nachfolgenden ausführlichen Beschreibung der nicht einschränkenden Ausführungsformen der Erfindung anhand der beigefügten Zeichnungen. Darin zeigen:
- Figur 1 schematisch und von oben einen erfindungsgemäßen Befestigungsclip;
- Figur 2 schematisch und in einer Endansicht den Clip aus Figur 1;
- Figur 3 schematisch einen Ausschnitt von Figur 1;
- Figur 4 schematisch und in einer perspektivischen Ansicht den Clip aus Figur 1 in der Montageausführung gegenüber einer Rille des Steckers und einer Struktur;

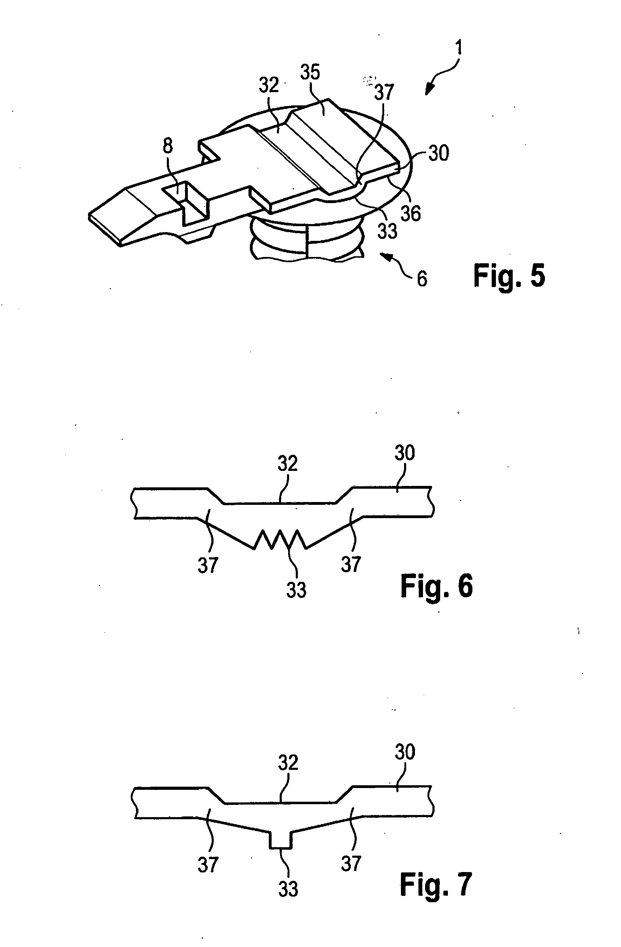

- Figur 5 schematisch und in einer perspektivischen Ansicht den Clip aus Figur 1;
- Figur 6 und Figur 7 schematisch zwei weitere mögliche Varianten eines verformbaren Bereichs des erfindungsgemäßen Clips.

Die Erfindung betrifft das Gebiet der Befestigung von Einrichtungen, die Elemente 3 genannt werden, an einer Struktur 2 und insbesondere die Befestigung von Steckern, insbesondere von elektrischen Steckern, an der Struktur eines Straßenfahrzeugs vom Typ Kraftfahrzeug oder dergleichen.

Die Erfindung betrifft einen Befestigungsclip 1, der dazu vorgesehen ist, eine derartige Befestigung zu gewährleisten. Dieser Clip 1 ist vorzugsweise ein Steckerhalter. Eine besondere Ausführungsform der Erfindung ist in den Figuren veranschaulicht.

Der Befestigungsclip 1 weist ein Einhakmittel 6 für seine Befestigung an einer Struktur 2 auf.

Für sein Einhaken an einer Struktur 2 über einen erfindungsgemäßen Clip 1 weist ein Element 3, insbesondere ein Stecker, mindestens eine Rille 4 auf. Diese ist durch einen ersten Einhakrand 23 und einen zweiten Einhakrand 24, die zueinander parallel sind und einander gegenüberliegen, begrenzt.

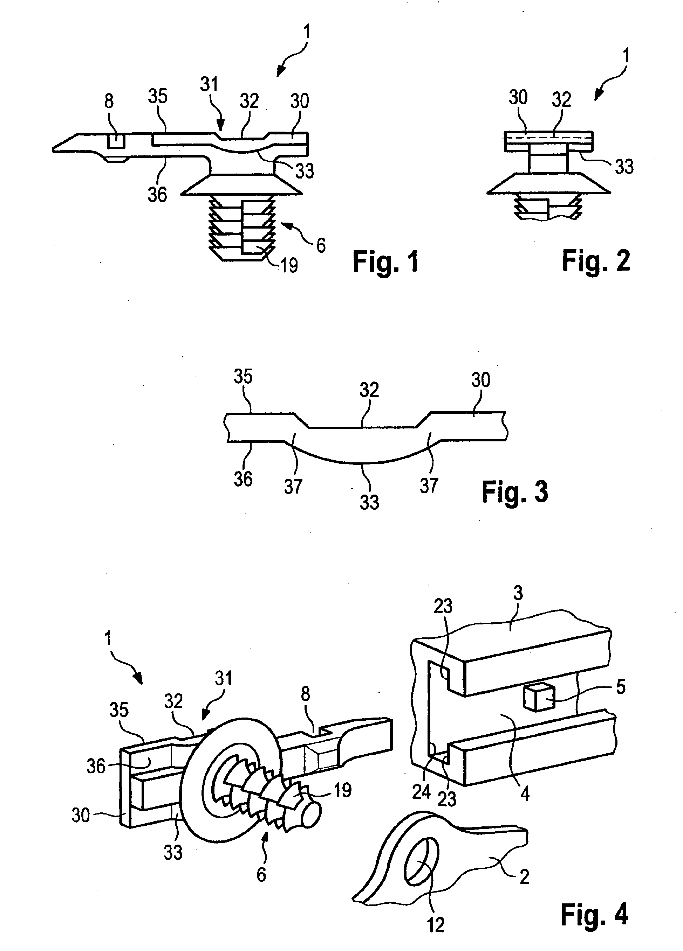

Der Clip 1 weist eine Lasche 30 auf, die so ausgelegt ist, dass sie zumindest an einem ihrer Ränder auf Höhe einer ersten Ebene 35 und einer zweite Ebene 36 dieser Lasche 30, die zueinander parallel sind, mit dieser Rille 4 zusammenwirken kann. Die Lasche wirkt vorzugsweise auf Höhe von zwei einander gegenüberliegenden und parallelen Rändern mit der Rille 4 zusammen, wie in Figur 4 zu sehen.

Die Lasche 30 weist mindestens ein erstes Befestigungsmittel 31 auf, das mindestens eine erste Fläche 32, die sich auf einer ersten Seite der Lasche 30 erstreckt, und mindestens eine zweite Fläche 33 auf der dieser ersten Seite gegenüberliegenden Seite aufweist. Die erste Fläche 32 verläuft vollständig in Bezug auf die erste Ebene 35 zurückgesetzt auf einer einzigen Seite dieser Ebene in der Dicke der Lasche 30 zur zweiten Ebene 36. Die zweite Fläche 33 verläuft vollständig zur zweiten Ebene 36 hervorstehend auf einer Seite dieser Ebene zum Äußeren der Fläche 30 und gegenüber der ersten Fläche 32.

Die erste Fläche 32 und die zweite Fläche 33 begrenzen zusammen mindestens einen elastisch verformbaren Bereich 37. Dieser elastisch verformbare Bereich 37 kann auf verschiedene Weisen realisiert werden. Er kann durch das gesamte Volumen gebildet sein, das zwischen der ersten Fläche 32 und der zweiten Fläche 33 besteht, oder durch einen oder mehrere Abschnitte dieses Volumens, zum Beispiel durch die Bereiche zur Verbindung dieser Flächen mit der ersten Ebene 35 und der zweiten Ebene 36 der Lasche 30.

Aus diesem Grund führt eine Verformung, die auf die zweite Fläche 33 ausgeübt wird, da diese gegenüber der ersten Fläche 32 liegt, zu einer Verformung dieser Fläche.

Es ist zu verstehen, dass die Lasche 30 an einer ihrer Flächen einen Hohlraum aufweist, der von der ersten Fläche 32 und der ersten Ebene 35 begrenzt ist, und auf der entgegengesetzten Fläche gegenüber diesem Hohlraum eine Ausbauchung, die von der zweiten Fläche 33 und der zweiten Ebene 36 begrenzt ist und deren Volumen mit dem Volumen dieses Hohlraums in Beziehung steht. Es ist somit wichtig, dass gegenüber jeder Ausbauchung ein Hohlraum gebildet ist, der vorzugsweise ein Volumen hat, das größer ist als das Volumen der Ausbauchung oder diesem entspricht. Beim Einsetzen des Elements 3 auf den Clip 1 wirken die erste Ebene 35 und die zweite Ebene 36 der Lasche 30 mit dem ersten Einhakrand 23 und dem zweiten Einhakrand 24 der Rille 4 zusammen, und das Vorhandensein der Ausbauchung/Ausbauchungen führt zu einer Kompressionskraft auf diese. Dadurch, dass der elastisch verformbare Bereich 37 vorhanden ist, verlagert sich das in der Ausbauchung vorhandene Materialvolumen zu dem bestehenden Leerraum, den der Hohlraum darstellt.

Erfindungsgemäß ist das einerseits von der zweiten Fläche 33 und der zweiten Ebene 36 begrenzte Volumen kleiner oder gleich dem Volumen, das andererseits von der ersten Fläche 32 und der ersten Ebene 35 begrenzt ist, was den Vorteil bietet, dass eine gute Flexibilität des Clips 1 möglich ist und es keine unnötige Beanspruchung gibt, wobei das beim Montieren des Elements am Clip verlagerte Materialvolumen in dem Volumen enthalten ist, das im Hohlraum verfügbar ist.

Der maximale Abstand zwischen der zweiten Fläche 33 und der zweiten Ebene 36 ist vorzugsweise kleiner als der maximale Abstand zwischen der ersten Fläche 32 und der ersten Ebene 35 oder entspricht diesem. Dies ermöglicht eine Verteilung des Volumens der Ausbauchung, was die Materialverlagerung zum Volumen des Hohlraums vereinfacht.

Vorteilhafterweise ist der Clip 1 aus einem Kunststoffmaterial wie Polyamid oder dergleichen realisiert und weist eine zweite Fläche 33 auf, deren Versatz in Bezug auf die zweite Ebene 36 zwischen 0 und 75 % der Dicke der Lasche 30 beträgt.

Gemäß einer Ausführungsvariante der Erfindung weist die Lasche 30 mindestens einen elastisch verformbaren Bereich 37 auf, der sich zwischen der ersten Fläche 32 und der zweiten Fläche 33 befindet und eine Dicke hat, die geringer ist als die Dicke zwischen der ersten Ebene 35 und der zweiten Ebene 36.

In einer weiteren Variante weist die zweite Fläche 33 Riefelungen auf, die senkrecht zur Richtung des Einsetzens des Clips 1 in das zu befestigende Element 3, insbesondere in den zu befestigenden Stecker verlaufen.

Bei einer weiteren Variante weist die zweite Fläche 33 eine oder mehrere Nasen an ihrer Ausbauchung auf.

Bei einer weiteren Ausführungsform weist der Clip 1 eine Folge von elastisch verformbaren Bereichen 37 auf, die einer Folge von Ausbauchungen, die durch zweite Flächen 33 gebildet sind, und Hohlräumen, die durch erste Flächen 32 gebildet sind, zugeordnet ist.

Gemäß einem weiteren Aspekt der Erfindung kann der Clip 1 vorteilhaft ein zweites Mittel zur Befestigung am Stecker aufweisen, das durch eine Aufnahme 8 gebildet ist, die auf einer Fläche des Clips 1 liegt, die dazu vorgesehen ist, zu einem Boden gerichtet zu werden, der in der Rille 4 des Steckers enthalten ist. Diese Aufnahme 8 ist so ausgebildet, dass sie mit einem vorstehenden Teil 5 am Boden der Rille 4 zusammenwirken kann. Die Aufnahme 8 kann vorteilhaft die Form einer Querrille 8, d.h. senkrecht zur Richtung des Einsetzens des Clips 1 in die Rille 4 oder umgekehrt, annehmen. Diese Rille kann an mindestens einem ihrer Enden ausmünden, was in diesem Fall den Formvorgang vereinfacht, wenn dieser Clip durch Formen erhalten wird.

Beim Anbringen des Elements 3 an dem Clip 1 wird die Lasche 30 des Clips in die Rille 4 des Steckers eingesetzt oder die Rille 4 des Steckers in die Richtung, in die die Aufnahme 8 als erste in die Rille 4 eingesetzt wird, auf die Lasche 30 des Clips 1 aufgesetzt. Der Stecker wird in Richtung des Einsetzens des Clips 1 verlagert, bis er in Längsrichtung in Kontakt mit dem vorstehenden Bereich 5 gelangt, der in der Rille 4 des Steckers besteht. Mit einem leichten Drücken in Translationsrichtung wird das Ende des Clips 1, das in diesem Bereich elastisch ist, gezwungen, ausreichend nachzugeben, damit der Vorsprung 5 mit der Aufnahme 8 zusammenwirken kann, wodurch eine erste relative Blockierung des Steckers in Bezug auf den Clip hervorgerufen wird. Beim Einsetzen der Lasche 30 des Befestigungsclips in die Rille 4 des Steckers verlagert sich die Ausbauchung der zweiten Fläche 33, die sich im Ruhezustand jenseits der zweiten Ebene 36 erstreckt, die so ausgebildet ist, dass sie mit einem der Einhakränder 23, 24 der Rille 4 zusammenwirkt, zum Hohlraum der ersten Fläche 32 aufgrund des Vorhandenseins des elastisch verformbaren Bereichs oder der elastisch verformbaren Bereiche 37, um das vollständige Zusammenwirken des Clips und der Rille 4 zu ermöglichen. Die verbleibende Druckbeanspruchung ermöglicht ein permanentes Klemmen des Clips 1 in der Rille 4 und deren Blockierung zueinander.

Der Clip 1 weist ein Mittel 6 zum Einhaken an einer Struktur 2 auf, das so ausgelegt ist, dass es mit einer entsprechenden Öffnung 12, die vorzugsweise kreisförmig und in der Struktur ausgebildet ist, zusammenwirkt. Dieses Einhakmittel, das ein bekanntes Mittel sein kann, das aus Rückstellwiderhaken zusammengesetzt ist, im Allgemeinen Tanne genannt, besteht aus einer Basis mit einem insbesondere zylindrischen Steg, der hohl und auf seiner gesamten oder auf einem Teil seiner Länge mit mehreren flexiblen Lamellen 19 versehen sein kann, die jeweils entlang einer schrägen Ebene in Bezug zur Längsmittelachse des Stegs orientiert sind. Jede Lamelle weist einen Endabschnitt auf, der sich im Ruhezustand jenseits der Kontur der Öffnung 12 erstreckt, wenn der Steg konzentrisch zur Öffnung 12 angeordnet ist. Die Befestigung des Clips an dem Halter 2 erfolgt, indem senkrecht zur Struktur und in der Längsachse des Stegs ein Druck auf das Einhakmittel ausgeübt wird. Beim Einsetzen des Stegs in die Öffnung 12 geben die flexiblen Lamellen nach, die in Kontakt mit dem Rand der Öffnung gelangen, um sich in der Kontur der Öffnung zu befinden. Nach dem Einsetzen des Stegs in die Struktur 2 neigen die Lamellen dazu, durch Elastizität in ihre ursprüngliche Stellung zurückzukehren und somit in eine Ausdehnungsrichtung nachzugeben, wodurch sie aus der Kontur der Öffnung 12 austreten und der Befestigungsclip einem Herausziehen standhalten kann.

Der Clip 1 besteht vorzugsweise aus einem Stück, das durch Formen eines Kunststoffmaterials im Allgemeinen auf Polyamidbasis erhalten werden kann, das möglicherweise mit Glasfasern verstärkt ist oder Zusätze enthält, die eine erhöhte Flexibilität verleihen und dabei eine hohe Bruchfestigkeit gewährleisten. Diese Ausführung ist lediglich beispielhaft angegeben und schränkt den Umfang der Erfindung keineswegs ein. Somit kann der Clip 1 gemäß der Erfindung die Form von mehreren Basiselementen haben, die zusammengefügt werden, um das gleiche Endstück zu erhalten, wobei jedoch für jedes dieser Elemente Materialien verwendet werden, die für die Benutzungsbeanspruchungen am Besten geeignet sind.

## Patentansprüche

1. Clip (1) zur Befestigung eines Elements (3), insbesondere eines Steckers, an einer Struktur (2), mit mindestens einer Rille (4), die durch zwei parallele und gegenüberliegende Einhakränder (23; 24) begrenzt ist, wobei der Befestigungsclip (1) eine Lasche (30) aufweist, die so ausgelegt ist, dass sie zumindest an einem ihrer Ränder auf einer ersten Ebene (35) und einer zweiten Ebene (36), die zueinander parallel sind, mit der Rille (4) zusammenwirken kann, wobei die Lasche (30) mindestens ein erstes Befestigungsmittel (31) aufweist, das mindestens eine erste Fläche (32) und mindestens eine zweite Fläche (33) aufweist, wobei die erste Fläche (32) nur auf einer Seite der ersten Ebene (35) verläuft, und wobei sich die zweite Fläche (33) nur auf einer Seite der zweiten Ebene (36) gegenüber der ersten Fläche (32) erstreckt, wobei die erste Fläche (32) in Bezug auf die erste Ebene (35) zurückgesetzt und in der Dicke der Lasche (30) zur zweiten Ebene (36) verläuft, wobei sich die zweite Fläche (33) von der zweiten Ebene (36) hervorstehend zum Äußeren der Lasche (30) erstreckt, wobei die erste Fläche (32) und die zweite Fläche (33) zusammen mindestens einen elastisch verformbaren Bereich (37) begrenzen, **dadurch gekennzeichnet, dass** das auf der einen Seite von der zweiten Fläche (33) und der zweiten Ebene (36) begrenzte Volumen kleiner ist als das auf der anderen Seite von der ersten Fläche (32) und der ersten Ebene (35) begrenzte Volumen oder diesem entspricht.

2. Befestigungsclip (1) nach Anspruch 1, **dadurch gekennzeichnet, dass** der maximale Abstand zwischen der zweiten Fläche (33) und der zweiten Ebene (36) kleiner ist als der maximale Abstand zwischen der ersten Fläche (32) und der ersten Ebene (35) oder diesem entspricht.

3. Befestigungsclip (1) nach Anspruch 1 oder 2, **dadurch gekennzeichnet, dass** die Lasche (30) mindestens einen elastisch verformbaren Bereich (37) aufweist, der zwischen der ersten Fläche (32) und der zweiten Fläche (33) liegt und eine Dicke hat, die geringer ist als die Dicke zwischen der ersten Ebene (35) und der zweiten Ebene (36).

4. Befestigungsclip (1) nach einem der vorhergehenden Ansprüche, **dadurch gekennzeichnet, dass** er aus Kunststoff, wie etwa Polyamid oder dergleichen, besteht und eine zweite Fläche (33) aufweist, deren Versatz in Bezug auf die zweite Ebene (36) zwischen 0 und 75 % der Dicke der Lasche (30) beträgt.

5. Befestigungsclip (1) nach einem der vorhergehenden Ansprüche, **dadurch gekennzeichnet, dass** die zweite Fläche (33) Riefelungen aufweist, die senkrecht zur Richtung des Einsetzens des Clips (1) in das Element (3) verlaufen.

6. Befestigungsclip (1) nach einem der vorhergehenden Ansprüche, **dadurch gekennzeichnet, dass** die zweite Fläche (33) eine oder mehrere Nasen an der Ausbauchung aufweist.

7. Befestigungsclip (1) nach einem der vorhergehenden Ansprüche, **dadurch gekennzeichnet, dass** er eine Aufnahme (8) aufweist, die an einem seiner Enden ausmündet und so ausgelegt ist, dass sie mit einem Vorsprung (5) eines Elements (3) zusammenwirken kann.

8. Befestigungsclip (1) nach einem der vorhergehenden Ansprüche, **dadurch gekennzeichnet, dass** er eine Folge von elastisch verformbaren Bereichen (37) aufweist, die einer Folge von Ausbauchungen und Hohlräumen zugeordnet ist.

9. Befestigungsclip (1) nach einem der vorhergehenden Ansprüche, **dadurch gekennzeichnet, dass** er einen Steckerhalter bildet.

## Claims

1. A clip (1) for fixing an element (3), in particular a plug, to a structure (2), having at least one groove (4) which is defined by two parallel and opposite hook-in edges (23; 24), the fixation clip (1) including a tab (30) which is designed such that it can cooperate with the groove (4) at least on one of its edges on a first plane (35) and a second plane (36) which are parallel to each other, the tab (30) including at least one first fixing means (31) which has at least one first surface (32) and at least one second surface (33), the first surface (32) extending only on one side of the first plane (35), and the second surface (33) extending only on one side of the second plane (36) opposite the first surface (32), the first surface (32) extending set back with respect to the first plane (35) and in the thickness of the tab (30) to the second plane (36), the second surface (33) extending so as to protrude from the second plane (36) to the outside of the tab (30), the first surface (32) and the second surface (33) together defining at least one elastically deformable region (37), **characterized in that** the volume defined on one side by the second surface (33) and the second plane (36) is smaller than the volume defined on the other side by the first surface (32) and the first plane (35) or is equal thereto.

2. The fixation clip (1) according to claim 1, **characterized in that** the maximum distance between the second surface (33) and the second plane (36) is smaller than the maximum distance between the first surface (32) and the first plane (35) or is equal thereto.

3. The fixation clip (1) according to claim 1 or 2, **characterized in that** the tab (30) includes at least one elastically deformable region (37) which is located between the first surface (32) and the second surface (33) and has a thickness which is smaller than the thickness between the first plane (35) and the second plane (36).

4. The fixation clip (1) according to any of the preceding claims, **characterized in that** it is made of a plastic material such as polyamide or the like and includes a second surface (33) whose offset with respect to the second plane (36) is between 0 and 75 % of the thickness of the tab (30).

5. The fixation clip (1) according to any of the preceding claims, **characterized in that** the second surface (33) includes corrugations which extend perpendicularly to the direction of inserting the clip (1) into the element (3).

6. The fixation clip (1) according to any of the preceding claims, **characterized in that** the second surface (33) includes one or more noses on the bulge.

7. The fixation clip (1) according to any of the preceding claims, **characterized in that** it includes a receptacle (8) which opens on one of its ends and is designed such that it can cooperate with a protrusion (5) of an element (3).

8. The fixation clip (1) according to any of the preceding claims, **characterized in that** it includes a sequence of elastically deformable regions (37) which is associated with a sequence of bulges and cavities.

9. The fixation clip (1) according to any of the preceding claims, **characterized in that** it forms a plug holder.

## Revendications

1. Clip (1) pour la fixation d'un élément (3), en particulier d'un connecteur sur une structure (2), comportant au moins une rainure (4) délimitée par deux bords d'enclenchement (23; 24) parallèles et opposés, le clip de fixation (1) présentant une patte (30) réalisée de manière à pouvoir coopérer avec la rainure (4) sur au moins l'un de ses bords sur un premier plan (35) et sur un deuxième plan (36) parallèles l'un par rapport à l'autre, la patte (30) présentant au moins un premier moyen de fixation (31) qui comporte au moins une première surface (32) et au moins une deuxième surface (33), la première surface (32) s'étendant seulement d'un côté du premier plan (35), et la deuxième surface (33) s'étendant seulement d'un côté du deuxième plan (36) en face de la première surface (32), la première surface (32) s'étendant en retrait par rapport au premier plan (35) et dans l'épaisseur de la patte (30) vers le deuxième plan (36), la deuxième surface (33) s'étendant en saillie du deuxième plan (36) vers l'extérieur de la patte (30), la première surface (32) et la deuxième surface (33) délimitant ensemble au moins une zone élastiquement déformable (37), **caractérisé en ce que** le volume délimité d'un côté par la deuxième surface (33) et le deuxième plan (36) est plus petit que le volume délimité de l'autre côté par la première surface (32) et le premier plan (35) ou est égal à celui-ci.

2. Clip de fixation (1) selon la revendication 1, **caractérisé en ce que** la distance maximale entre la deuxième surface (33) et le deuxième plan (36) est inférieure à la distance maximale entre la première surface (32) et le premier plan (35) ou est égale à celle-ci.

3. Clip de fixation (1) selon la revendication 1 ou 2, **caractérisé en ce que** la patte (30) présente au moins une zone élastiquement déformable (37) qui est agencée entre la première surface (32) et la deuxième surface (33) et qui présente une épaisseur inférieure à l'épaisseur entre le premier plan (35) et le deuxième plan (36).

4. Clip de fixation (1) selon l'une des revendications précédentes, **caractérisé en ce qu'**il est réalisé en matière plastique telle que le polyamide ou similaire, et présente une deuxième surface (33) dont le décalage par rapport au deuxième plan (36) est compris entre 0 et 75 % de l'épaisseur de la patte (30).

5. Clip de fixation (1) selon l'une des revendications précédentes, **caractérisé en ce que** la deuxième surface (33) présente des cannelures qui s'étendent perpendiculairement au sens d'insertion du clip (1) dans l'élément (3).

6. Clip de fixation (1) selon l'une des revendications précédentes, **caractérisé en ce que** la deuxième surface (33) présente un ou plusieurs nez sur l'évasement.

7. Clip de fixation (1) selon l'une des revendications précédentes, **caractérisé en ce qu'**il présente un logement (8) qui débouche à l'une des ses extrémités et qui est réalisé de manière à pouvoir coopérer avec une saillie (5) d'un élément (3).

8. Clip de fixation (1) selon l'une des revendications précédentes, **caractérisé en ce qu'**il présente une série de zones élastiquement déformables (37) qui sont associées à une série de bosses et de cavités.

9. Clip de fixation (1) selon l'une des revendications précédentes, **caractérisé en ce qu'**il forme une attache de connecteur.
